# FASCICULE DE BREVET EUROPEEN

(11) **EP 1 957 843 B1**
(45) Date de publication et mention de la délivrance du brevet: **02.03.2011**
(21) Numéro de dépôt: 06831172.9
(22) Date de dépôt: 24.11.2006
(51) Int. Cl.: F16L 1/24, H02G 9/12

(54) **ENSEMBLE DE BOUEES DE SUSTENTATION POUR CONDUITE SOUS-MARINE FLEXIBLE**
ANORDNUNG VON STÜTZBOJEN FÜR EINE FLEXIBLE UNTERWASSER-ROHRLEITUNG
ASSEMBLY OF SUPPORT BUOYS FOR A FLEXIBLE SUBMARINE PIPELINE

(30) Priorité: 28.11.2005 FR 0512017
(43) Date de publication de la demande: 20.08.2008
(73) Titulaire: Technip France, 92400 Courbevoie (FR)
(72) Inventeur: ROUTEAU, Sylvain, F-92210 Saint Cloud (FR); MILLET, Jacques, F-75020 Paris (FR)
(74) Mandataire: Bertrand, Didier
(86) Numéro de dépôt international: PCT/FR2006/002586
(87) Numéro de publication internationale: WO 2007/060335

(56) Documents cités:
- GB-A- 1 268 232
- GB-A- 2 309 576
- US-A- 3 214 921
- US-A- 3 594 835
- US-A- 4 065 822
- US-B1- 6 270 387

## Description

La présente invention se rapporte à un ensemble de bouées de sustentation pour les conduites sous-marines flexibles.

Ces conduites sous-marines, sont destinées au transport des hydrocarbures et elles sont généralement étendues en caténaire entre une installation de fond et une installation de surface.

En eau profonde, lorsque le fond et la surface sont très éloignés l'un de l'autre, les conduites sous-marines sont soumises à des forces de traction considérables limitées en partie grâce à des bouées de sustentation. Ces bouées sont généralement installées de proche en proche sur certaines portions de la conduite sous-marine, et sont maintenues par des colliers de serrage autour de la conduite, de manière à reprendre au moins une partie des efforts de traction qui s'exerce sur elle et par là même, sur l'installation de surface.

On se référera notamment au document US 6 270 387, lequel montre une bouée de sustentation formée d'un manchon cylindrique en deux parties. Le manchon présente un trou central de passage de la conduite et il est coupé axialement pour former les deux parties qui s'articulent l'une par rapport à l'autre autour d'une génératrice de la forme cylindrique. Un collier de serrage divisé en deux demi-colliers respectivement solidaires des deux parties de manchons, et destinés à être raccordés l'un à l'autre pour venir bloquer les deux parties de manchons ensemble et autour de la conduite sous-marine. Ces manchons sont indépendants les uns des autres et ils sont montés sur la portion de conduite au cours de l'installation de cette dernière entre l'installation de fond et l'installation de surface.

Un inconvénient du montage de ces colliers de serrage autour de la conduite sous-marine, réside dans la fragilité des couches superficielles de ladite conduite. En effet, elles sont recouvertes d'une couche en mousse isolante et il est alors nécessaire de prévoir un insert plus rigide à la place de la mousse à l'endroit où l'on vient monter le collier de serrage de manière à éviter la compression de la mousse qui alors fluerait.

Un autre inconvénient de ce dispositif est que le déplacement de ces bouées en translation le long de la conduite sous-marine, pour ajuster par exemple la répartition des efforts de traction, dans le cas où elle n'aurait pas été suffisamment bien évaluée, nécessite de remonter la conduite sous-marine en surface pour réajuster la position de tous les manchons cylindriques. Cette opération suppose à tout le moins, que l'on desserre tous les colliers de serrage et que l'on fasse glisser chacune des bouées les unes après les autres vers une nouvelle portion de conduite, et que l'on resserre ensuite tous les colliers de serrage. US-A-3594835 décrit une autre alternative ayant les caractéristiques du préambule de la revendication 1.

Un problème qui se pose alors et que vise à résoudre la présente invention est de fournir un ensemble de bouées de sustentation qui permette de diminuer le nombre d'opérations nécessaires au déplacement de l'ensemble de bouées le long de la conduite sous-marine et par conséquent qui permette de diminuer le temps global d'intervention.

Dans le but de résoudre le problème posé, la présente invention propose un ensemble de bouées de sustentation pour conduite sous-marine flexible adaptée au transport des hydrocarbures, ledit ensemble de bouées comprenant une pluralité de bouées susceptibles d'être installées de proche en proche sur au moins une portion de ladite conduite sous-marine flexible, ledit ensemble de bouées comprenant des moyens de fixation permettant de bloquer lesdites bouées en translation sur ladite portion de conduite ; selon l'invention, lesdits moyens de fixation comprennent une ligne d'accrochage reliant successivement chacune desdites bouées, chacune desdites bouées étant maintenue, de proche en proche, bloquée en translation sur ladite ligne d'accrochage ; et, des moyens de liaison pour maintenir ladite ligne d'accrochage étendue le long de ladite portion de conduite ; par quoi lesdites bouées de ladite pluralité de bouées sont bloquées en translation par rapport à ladite portion de conduite.

Ainsi, une caractéristique de l'invention réside dans la mise en oeuvre d'une ligne d'accrochage sur laquelle sont montés de proche en proche lesdites bouées, lesquelles sont maintenues bloquées en translation sur cette ligne d'accrochage. En outre, les moyens de liaison permettent de maintenir la ligne d'accrochage dont les bouées sont solidaires le long de la portion de conduite désirée. De la sorte, il suffit pour déplacer l'ensemble de bouées le long de la conduite sous-marine d'entraîner en translation la ligne d'accrochage qui elle-même entraîne toutes les bouées sans savoir à démonter chacune des bouées et à les déplacer une par une sur la conduite. Par ailleurs, il n'est nul besoin de prévoir d'insert plus rigide sur la conduite au niveau de la bouée, puisqu'elle est maintenant montée coulissante sur la conduite et qu'elle ne la comprime pas. L'installation des inserts rigides selon l'art antérieur, à des endroits à déterminer au moment de l'installation de la conduite, nécessitait des opérations manuelles et un temps d'immobilisation plus long des moyens de mise en oeuvre.

Chacune desdites bouées présente un trou central de passage adapté à recevoir ladite conduite sous-marine libre en coulissement. De la sorte, chaque bouée entoure complètement la conduite ce qui permet de mieux répartir les efforts de sustentation sur la conduite, et au surplus, la conduite est montée coulissante dans chacune des bouées, de sorte que l'entraînement de la ligne d'accrochage le long de la conduite permet de faire coulisser les bouées sur la conduite en une seule opération.

Par ailleurs, et avantageusement, chacune desdites bouées présente un trou périphérique de passage, ladite ligne d'accrochage traversant lesdites bouées de ladite pluralité de bouées par ledit trou périphérique de passage de manière à assurer un blocage en translation plus efficace de chaque bouée sur la ligne d'accrochage et aussi, lors du déplacement des bouées le long de la conduite, de manière à exercer des efforts de traction longitudinaux au plus près du trou central de passage pour obtenir un meilleur guidage en coulissement des bouées sur la conduite.

Selon un mode de réalisation particulier de l'invention, chacune desdites bouées présentant deux demi-bouées séparables et symétriques l'une de l'autre par rapport à un plan axial, lesdites demi-bouées étant adaptées à être rassemblées pour former ladite bouée, ledit trou central et ledit trou périphérique sont respectivement divisés axialement en deux portions symétriques l'une de l'autre par rapport audit plan axial, une portion de chacun des trous dans l'une desdites demi-bouées et une autre portion dans l'autre desdites demi-bouées. Ainsi, lorsque les demi-bouées sont installées sur la conduite sous-marine, la ligne d'accrochage est simultanément montée en prise dans les bouées. Préférentiellement, la ligne d'accrochage est équipée d'une pluralité de manchons de blocage adaptés à l'enserrer à force, chacun desdits manchons de blocage étant respectivement emprisonné à l'intérieur de chacune desdites bouées. Ainsi, les manchons de blocage emprisonnés à l'intérieur des bouées forment des épaulements, qui viennent alors en butée à l'intérieur des bouées de façon à bloquer en translation les bouées par rapport à la ligne d'accrochage.

Avantageusement, chacun desdits manchons est divisé en deux demi-manchons séparables et symétriques l'un de l'autre par rapport à un autre plan axial, lesdits demi-manchons étant équipés de moyens de serrage vissables pour enserrer à force ladite ligne d'accrochage entre lesdits demi-manchons. De la sorte, la position des manchons est réglable et peut être prédéterminée pour régler la distance entre les bouées.

Par ailleurs, au moins deux colliers de serrage adaptés à être maintenus bloqués en translation autour de ladite conduite sous-marine, par exemple un à chacune des extrémités de la ligne d'accrochage, constituent des moyens de liaison permettant d'étendre ladite ligne d'accrochage le long de la conduite sous-marine et par là même, de maintenir les bouées en position fixe sur ladite conduite et régulièrement espacées.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle d'un ensemble de bouées de sustentation conforme à l'invention ;
- la Figure 2A est une vue schématique de face d'un élément de détail illustré sur la Figure 1, et divisé en deux parties ;
- la Figure 2B est une vue schématique de côté de l'élément de détail illustré sur la Figure 2A ;
- la Figure 3A est une vue schématique d'un autre élément de détail illustré sur la Figure 2A ;
- la Figure 3B est une vue schématique de côté dudit autre élément de détail illustré sur la Figure 2B.

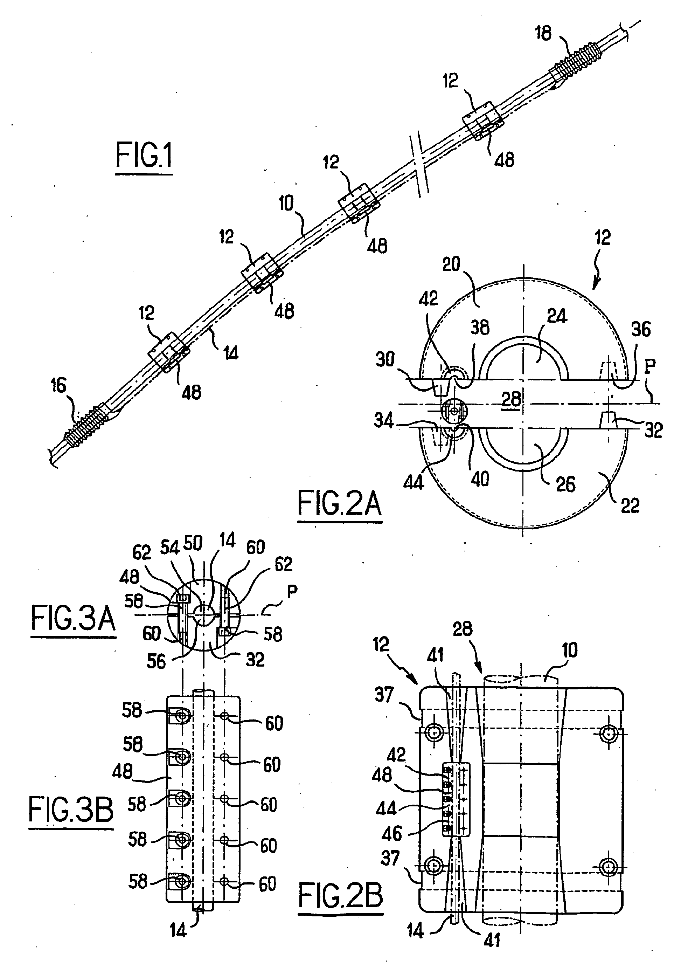

La Figure 1 montre une portion de conduite sous-marine flexible 10, volontairement tronquée, et qui est adaptée à s'étendre entre une installation de fond et une installation de surface non représentée. Cette portion de conduite sous-marine 10 est équipée d'un ensemble de bouées 12, sur la Figure 1 au nombre de 4, pour la clarté du dessin, mais qui est en réalité bien plus important. Ainsi qu'on l'expliquera plus en détail ci-après, chacune des bouées 12 entoure la conduite 10, et les bouées sont réliées ensemble successivement au moyen d'une ligne d'accrochage 14, formée par exemple d'un câble. Cette ligne d'accrochage 14 est maintenue étendue le long de la conduite 10 grâce à deux colliers de serrage 16,18 bloqués en translation sur la conduite 10 de part et d'autre de l'ensemble de bouées 12.

Chaque bouée 12 est liée en translation à la ligne d'accrochage 14 qui elle-même est maintenue en position fixe le long de la conduite 10. Aussi, les bouées 12 sont bloquées en translation sur la conduite 10.

On décrira maintenant en référence aux Figures 2A et 2B la structure d'une bouée 12. Ces bouées 12 sont constituées de deux demi-bouées 20, 22, symétriques l'une de l'autre par rapport à un plan axial P et elles sont assemblées sur la conduite pour former un manchon cylindrique qui entoure cette conduite 10. Ce manchon cylindrique présente un diamètre compris par exemple entre 1 et 1,5 m et une longueur comprise toujours par exemple, entre 1 et 2 m.

Les deux demi-bouées 20, 22 sont ici réalisées en mousse d'un matériau plastique, mais on peut très bien mettre en oeuvre des demi-bouées formées de caissons étanches par exemple en acier.

Les deux demi-bouées 20, 22 présentent des premiers évidements axiaux 24, 26, formant des rainures en U, ménagés en regard l'un de l'autre et adaptés à former un trou central de passage 28 de symétrie sensiblement circulaire lorsque les deux demi bouées 20, 22 sont assemblées. Le trou central de passage 28 permet ainsi le passage de la conduite 10. Par ailleurs, les deux demi-bouées 20, 22 présentent respectivement des plots de centrage 30, 32 orientés sensiblement perpendiculairement au plan axial P et qui sont adaptés à venir s'encastrer dans des trous correspondants 34, 36 de manière à ajuster parfaitement les évidements axiaux 24, 26 pour qu'ils forment le trou central de passage 28 avec une symétrie circulaire prédéterminée. Ainsi, la conduite sous-marine flexible 10 pourra être installée à coulissement à l'intérieur des bouées 12. Par ailleurs, les deux demi-bouées 20, 22 présentent respectivement des rainures périphériques 37 aptes à coïncider et qui sont adaptées à recevoir un collier périphérique de serrage pour maintenir ensemble les deux demi-bouées 20, 22. De la sorte, les bouées ne sont plus directement accrochées sur un collier enserrant directement la conduite sous-marine, ce qui préserve cette conduite des contraintes exercées par les colliers utilisés habituellement.

On notera également que le montage de ces deux demi-bouées 20, 22 pour former les bouées 12 sur la conduite sous-marine 10 est plus simple et par conséquent plus économique que le montage des bouées selon l'art antérieur.

En outre, les deux demi-bouées 20, 22 présentent des seconds évidements périphériques longitudinaux 38, 40 formant également des rainures en U, qui s'étendent respectivement, sensiblement parallèlement aux évidements axiaux 24, 26, et en regard l'un de l'autre symétriquement par rapport au plan axial P, pour former lorsque les deux demi-bouées 20, 22 sont rassemblées, un seul trou périphérique de passage 41, sensiblement parallèle au trou central de passage pour recevoir la ligne d'accrochage 14.

Par ailleurs, les seconds évidements périphériques 38, 40, présentent à mi-distance entre leurs extrémités qui débouchent à l'extérieur, et respectivement dans chacune des deux demi-bouées 20, 22, des élargissements en regard 42, 44, symétriques l'un de l'autre également par rapport au plan axial P. Ces élargissements en regard 42, 44 sont adaptés à former une cavité 46 pour loger un manchon de blocage 48, qui est serti ou serré à force sur la ligne d'accrochage 14. Ce manchon de blocage 48, est emprisonné dans la cavité 46 lorsque les deux demi-bouées 20, 22 sont assemblées, et ainsi, dès lors que le manchon de blocage 48 enserre la ligne d'accrochage 14, cette dernière est bloquée en translation dans le trou périphérique de passage 41.

On retrouve en détail sur les Figures 3A et 3B, le manchon de blocage 48 qui est maintenu serré et en position fixe sur la ligne d'accrochage 14. Ce manchon de blocage 48 est divisé axialement en deux demi-manchons 50, 52 symétriques l'un de l'autre par rapport à un autre plan axial P', et ils présentent deux rainures axiales 54, 56, respectivement dans chacun des deux demi-manchons 50, 52, en regard l'une de l'autre. Ces rainures axiales 54, 56 sont adaptées à recevoir la ligne d'accrochage 14. En outre, chacun des deux demi-manchons 50, 52 présente d'un côté de la rainure axiale, une rangée d'orifices 58 et de l'autre côté une rangée de taraudages 60, percés sensiblement perpendiculairement audit autre plan axial P', de façon que les orifices 58 d'un des demi-manchons 50 correspondent avec les taraudages 60 de l'autre demi-manchon 52 tandis que les orifices 58 de cet autre demi-manchon 52 correspondent avec les taraudages 60 dudit un desdits manchons 50. De la sorte, des moyens vissables 62 sont adaptés à être engagés dans chacun des orifices 58 et vissés à force dans le taraudage 60 qui lui correspond, afin de prendre en étau la ligne d'accrochage 14 entre les deux demi-manchons 50, 52. Ainsi, les manchons de blocage sont maintenus et bloqués en translation sur la ligne d'accrochage 14.

Ainsi, si on se réfère à nouveau à la Figure 1, sur laquelle les manchons de blocage 48 sont solidaires en translation de la ligne d'accrochage 14, ces manchon de blocage 48 étant eux-mêmes solidaires en translation des bouées 12 et régulièrement espacés les uns des autres, l'extension de la ligne d'accrochage 14 et son maintien en position fixe le long de la conduite flexible 10 permet de maintenir chacune des bouées 12 en position fixe par rapport à la conduite 10 et sensiblement régulièrement espacées les unes des autres le long de la conduite 10. Par ailleurs, si l'on souhaite déplacer longitudinalement l'ensemble de bouées 12 le long de la conduite flexible 10, il suffit pour cela de desserrer les deux colliers de serrage 16, 18 à chacune des extrémités de la ligne d'accrochage 14 et d'entraîner en translation la ligne d'accrochage 14 dans un sens ou dans un sens opposé, les bouées 12 coulissant librement le long de la conduite 10.

## Revendications

1. Ensemble de bouées (12) de sustentation pour conduite sous-marine flexible (10) adaptée au transport des hydrocarbures, ledit ensemble de bouées comprenant une pluralité de bouées (12) susceptibles d'être installées de proche en proche sur au moins une portion de ladite conduite sous-marine flexible (10), ledit ensemble de bouées (12) comprenant des moyens de fixation permettant de bloquer lesdites bouées (12) en translation sur ladite portion de conduite (10) ;
lesdits moyens de fixation comprenant:
- une ligne d'accrochage (14) reliant successivement chacune desdites bouées (12),
et,
- des moyens de liaison (16,18) pour maintenir ladite ligne d'accrochage (14) étendue le long de ladite portion de conduite (10) ; par quoi lesdites bouées (12) de ladite pluralité de bouées sont bloquées en translation par rapport à ladite portion de conduite (10) ; **caractérisé en ce que** chacune desdites bouées (12) est maintenue, de proche en proche, bloquée en translation sur ladite ligne d'accrochage (14) ;
et **en ce que** chacune desdites bouées (12) présente un trou central de passage (28) adapté à recevoir ladite conduite sous-marine flexible (10) libre en coulissement, chaque bouée entourant complètement la conduite.

2. Ensemble de bouées de sustentation selon la revendication 1, **caractérisé en ce que** chacune desdites bouées (12) présente un trou périphérique de passage (41), ladite ligne d'accrochage (14) traversant lesdites bouées (12) de ladite pluralité de bouées par ledit trou périphérique de passage (41).

3. Ensemble de bouées de sustentation selon la revendications 2, **caractérisé en ce que**, chacune desdites bouées (12) présentant deux demi-bouées (20, 22) séparables et symétriques l'une de l'autre par rapport à un plan axial P, lesdites demi-bouées (20, 22) étant adaptées à être rassemblées pour former ladite bouée (12), ledit trou central de passage (28) et ledit trou périphérique de passage (41) sont respectivement divisés axialement en deux portions (24, 26 ; 38, 40) symétriques l'une de l'autre par rapport audit plan axial P, une portion dans l'une desdites demi-bouées (20) et une autre portion dans l'autre desdites demi-bouées (22).

4. Ensemble de bouées de sustentation selon la revendication 2 ou 3, **caractérisé en ce qu'**il comprend une pluralité de manchons de blocage (48), chaque manchon de blocage étant adapté à enserrer à force ladite ligne d'accrochage (14), chacun desdits manchons de blocage (48) étant respectivement emprisonné à l'intérieur de chacune desdites bouées (12).

5. Ensemble de bouées de sustentation selon la revendication 4, **caractérisé en ce que** chacun desdits manchons de blocage (48) est divisé en deux demi-manchons (50, 52) séparables et symétriques l'un de l'autre par rapport à un plan axial P', lesdits demi-manchons étant équipés de moyens de serrage vissables (62) pour enserrer à force ladite ligne d'accrochage (14) entre lesdits demi-manchons (50, 52).

6. Ensemble de bouées de sustentation selon l'une quelconque des revendications 1 à 5, **caractérisé en ce que** lesdits moyens de liaison comportent au moins deux colliers de serrage (16, 18) adaptés à être maintenus bloqués en translation autour de ladite conduite sous-marine flexible (10), ladite ligne d'accrochage (14) étant étendue entre lesdits colliers de serrage (16, 18).

## Claims

1. Set of floaters (12) for a flexible submarine pipe (10) adapted for the transport of hydrocarbons, the said set of floaters comprising a plurality of floaters (12) capable of being installed one after the other on at least one section of the said flexible submarine pipe (10), the said set of floaters (12) comprising securing means enabling the said floaters (12) to be locked in the translational sense on the said section of pipe (10);
the said securing means comprising:
- a hitching line (14) connecting each of the said floaters (12) together successively, and
- connecting means (16, 18) for maintaining the said hitching line (14) extended along the said section of pipe (10); by which means the said floaters (12) making up the said plurality of floaters are locked in the translational sense in relation to the said section of pipe (10);
**characterized in that** each of the said floaters (12) is maintained in position one after the other and locked in the translational sense on the said hitching line (14);
and **in that** each of the said floaters (12) exhibits a central transcurrent hole (28) so adapted as to receive the said flexible submarine pipe (10) in a freely sliding manner, each floater thereby completely surrounding the pipe.

2. Set of floaters according to Claim 1, **characterized in that** each of the said floaters (12) exhibits a peripheral transcurrent hole (41), the said hitching line (14) passing through the said floaters (12) making up the said plurality of floaters via the said peripheral transcurrent hole (41).

3. Set of floaters according to Claim 2, **characterized in that** each of the said floaters (12) exhibits two separable semi-floaters (20, 22) that are mutually symmetrical in relation to an axial plane P, the said semi-floaters (20, 22) being so adapted as to be capable of reassembly to form the said floater (12), the said central transcurrent hole (28) and the said peripheral transcurrent hole (41) being divided respectively axially into two mutually symmetrical sections (24, 26; 38, 40) in relation to the said axial plane P, these being one section in one of the said semi-floaters (20) and another section in the other of the said semi-floaters (22).

4. Set of floaters according to Claims 2 or 3, **characterized in that** it comprises a plurality of locking sleeves (48), each locking sleeve being so adapted as to hold the said hitching line (14) by force, each of the said locking sleeves (48) respectively being gripped tightly in the interior of each of the said floaters (12).

5. Set of floaters according to Claim 4, **characterized in that** each of the said locking sleeves (48) is divided into two separable semi-sleeves (50, 52) that are mutually symmetrical in relation to an axial plane P', the said semi-sleeves being equipped with threaded tightening means (62) for the purpose of holding the said hitching line (14) by force between the said semi-sleeves (50, 52).

6. Set of floaters according to any one of Claims 1 to 5, **characterized in that** the said connecting means comprise at least two clamps (16, 18) so adapted as to be maintained locked in the translational sense around the said flexible submarine pipe (10), the said hitching line (14) being extended between the said clamps (16, 18).

## Patentansprüche

1. Anordnung von Stützbojen (12) für eine flexible Unterwasser-Rohrleitung (19), vorgesehen für den Transport von Kohlenwasserstoffen, wobei die Anordnung von Bojen (12) eine Vielzahl von Bojen enthält, die nach und nach an zumindest einem Teil der flexiblen Unterwasser-Rohrleitung (10) installierbar sind, wobei die Anordnung von Bojen (12) Befestigungsmittel enthält, mit denen die Bojen (12) in der Verschiebung an dem Teil der Rohrleitung (10) gesperrt werden können;
wobei die Befestigungsmittel enthalten:
- eine Einhängleine (14) zur Verbindung jeder der Bojen (12) nacheinander; und
- Verbindungsmittel (16, 18), um die Einhängleine (14) entlang des Teils der Rohrleitung (10) gespannt zu halten, wodurch die Bojen (12) der Vielzahl von Bojen in der Verschiebung relativ zu dem Teil der Rohrleitung (10) gesperrt sind;
**dadurch gekennzeichnet, dass**
jede der Bojen (12) nach und nach in der Verschiebung an der Einhängleine (14) gesperrt gehalten wird; und dass jede der Bojen (12) ein mittiges Durchtrittsloch (28) aufweist, das für die Aufnahme der frei verschiebbaren flexiblen Unterwasserrohrleitung (10) vorgesehen ist, wobei jede Boje die Rohrleitung vollständig umgibt.

2. Anordnung von Stützbojen nach Anspruch 1, **dadurch gekennzeichnet, dass** jede der Bojen (12) ein umlaufendes Durchtrittsloch (41) aufweist, wobei die Einhängleine (14) die Bojen (12) der Vielzahl von Bojen durch das umlaufende Durchtrittsloch (41) durchsetzt.

3. Anordnung von Stützbojen nach Anspruch 2, **dadurch gekennzeichnet, dass** jede der Bojen (12) zwei Halbbojen (20, 22) aufweist, die trennbar und relativ zu einer axialen Ebene P zueinander symmetrisch sind, wobei die Halbbojen (20, 22) dafür vorgesehen sind, zusammengefügt zu werden, um die Boje (12) zu bilden, wobei das mittige Durchtrittsloch (28) und das umlaufende Durchtrittsloch (41) jeweils axial in zwei Teile (24, 26; 38, 40) geteilt sind, die relativ zu der axialen Ebene P zueinander symmetrisch sind, mit einem Teil in einer der Halbbojen (20) und einem anderen Teil in der anderen der Halbbojen (22).

4. Anordnung von Stützbojen nach Anspruch 2 oder 3, **dadurch gekennzeichnet, dass** sie eine Vielzahl von Sperrmuffen (48) enthält, wobei jede Sperrmufffe dafür vorgesehen ist, die Einhängleine (14) kraftschlüssig einzuspannen, wobei jede der Sperrmuffen (48) jeweils im Innern jeder der Bojen (12) eingeschlossen ist.

5. Anordnung von Stützbojen nach Anspruch 4, **dadurch gekennzeichnet, dass** jede der Sperrmuffen (48) in zwei Halbmuffen (50, 52) unterteilt ist, die trennbar und relativ zu einer axialen Ebene P' zueinander symmetrisch sind, wobei die Halbmuffen mit verschraubbaren Spannmitteln (62) versehen sind, um die Einhängleine (14) kraftschlüssig zwischen den Halbmuffen (50, 52) einzuspannen.

6. Anordnung von Stützbojen nach einem der Ansprüche 1 bis 5, **dadurch gekennzeichnet, dass** die Verbindungsmittel zumindest zwei Spannkrägen (16, 18) enthalten, die dafür vorgesehen sind, in der Verschiebung um die flexible Unterwasser-Rohrleitung (10) gesperrt gehalten zu werden, wobei die Einhängleine (14) zwischen den Spannkrägen (16, 18) gespannt ist.
